# EUROPÄISCHE PATENTSCHRIFT

(11) **EP 1 950 485 B1**
(45) Veröffentlichungstag und Bekanntmachung des Hinweises auf die Patenterteilung: **19.01.2011**
(21) Anmeldenummer: 07120336.8
(22) Anmeldetag: 09.11.2007
(51) Int. Cl.: F16L 37/56, F16L 39/00, F16L 29/04

(54) **Hydraulik-Mehrfachkupplung**
Hydraulic multiple coupling
Embrayage multiple hydraulique

(30) Priorität: 27.01.2007 DE 202007001231 U
(43) Veröffentlichungstag der Anmeldung: 30.07.2008
(73) Patentinhaber: Voswinkel KG, 58540 Meinerzhagen (DE)
(72) Erfinder: Hartmann, Jürgen, 58339 Breckerfeld (DE)
(74) Vertreter: Patentanwälte Dr. Solf & Zapf

(56) Entgegenhaltungen:
- DE-A1- 4 038 660
- DE-U1- 9 209 060
- DE-U1- 20 001 587
- FR-A- 1 202 265
- GB-A- 1 368 039

## Beschreibung

Die vorliegende Erfindung betrifft eine Mehrfachkupplung mit mindestens zwei Hydraulik-Steckkupplungen gemäß dem Oberbegriff des Anspruchs 1.

Derartige Mehrfachkupplungen dienen zum schnellen Verbinden und Trennen von jeweils mehreren (mindestens zwei ) Hydraulikleitungen, und zwar insbesondere für den lösbaren Anschluss von hydraulischen Anbaugeräten, wie Frontlader oder dergleichen, an Arbeitsfahrzeugen, wie Traktoren, Baufahrzeugen und dergleichen. An dem jeweiligen Fahrzeug - und somit auf der Seite einer Hydraulikpumpe (Druck-Geberseite) - wird eine erste Kupplungshälfte befestigt (Festteil), und das jeweilige Anbaugerät weist verbraucherseitig (Druck-Nehmerseite) eine zweite Kupplungshälfte (Losteil) auf. In aller Regel weist die geberseitige erste Kupplungshälfte als Muffenventile ausgebildete und in einem plattenförmigen Kupplungsträger gehalterte Kupplungsteile auf, während die zweite, nehmerseitige Kupplungshälfte als korrespondierende Steckerventile ausgebildete und ebenfalls in einem plattenförmigen Kupplungsträger gehalterte Kupplungsteile aufweist. Die Kupplungsträger sind zum paarweisen Steckkuppeln der Kupplungsteile mit ihren einander zugewandten Kupplungsflächen mittels einer mechanischen Betätigungseinrichtung gegeneinander bewegbar und in einer Kupplungslage arretierbar. Jedes Steckerventil weist einen über die Kupplungsfläche des zugehörigen Kupplungsträgers vorstehenden Steckschaft zum Einstecken in das im Wesentlichen stirnseitig in der Kupplungsfläche des zugehörigen Kupplungsträgers liegende Muffenventil auf.

Eine Mehrfachkupplung der beschriebenen Art ist durch die EP 0 522 493 B2 und durch die korrespondierende DE 92 09 060 U1 bekannt. Bei dieser Ausführung sollen die Stecker- und Muffenventile so ausgebildet und in den zugehörigen Kupplungsträgern (Tragplatten) gehaltert sein, dass in der Kupplungslage die Tragplatten dicht aneinander liegen, wodurch in der Kupplungslage jegliche Querbeanspruchungen von den Kupplungsteilen ferngehalten werden sollen. Weiterhin weisen die als Flachdichtkupplungen ausgebildeten Kupplungsteile jeweils eine stirnseitige Ventilkörper-Kreisfläche und eine diese umgebende ventilsitzseitige Ringfläche auf, und bei der bekannten Ausführung sollen jeweils in einer Schließlage die Kreisfläche und die Ringfläche übergangslos in einer gemeinsamen Verschlussebene liegen. Zudem sollen die Muffenventile jeweils mit einem radial nach außen hervorspringenden Umfangsflansch in einer entsprechenden Umfangsnut der zugehörigen Tragplatte derart versenkt befestigt sein, dass sie mit ihren flachen Stirnseiten auch in einer gemeinsamen Ebene mit der Kupplungsfläche der Tragplatte abschließen. Durch diese Anordnung soll die Tragplatte auf der Kupplungsseite in besonders einfacher Weise von Staub und anderen Verschmutzung durch einfaches Abwischen gereinigt werden können. Die Tragplatten weisen Mittelöffnungen auf, die für die Montage einer weiteren Flachdichtkupplung oder einer elektrischen oder pneumatischen Steckverbindung dienen können.

Die korrespondierenden Veröffentlichungen EP 1 127 655 A2 und DE 200 01 587 U1 beschreiben eine Ausblaseinrichtung für eine Mehrfachkupplung, bei der in einem Gehäuse ein im Inneren hohler Rundkörper eingelassen ist, der mit Druckluftdüsen bestückt ist, durch die im entkuppelten Zustand ein Luftstrom austritt, der über die im Gehäuse eingebrachten Kupplungselemente geführt wird, um vorhandene Schmutzpartikel zu entfernen. Diese Veröffentlichungen offenbaren aber keine Einzelheiten bezüglich der genaueren Ausgestaltung der Steckkupplungsteile.

Der vorliegenden Erfindung liegt die Aufgabe zugrunde, eine Mehrfachkupplung der beschriebenen Art bei konstruktiv einfacher Ausgestaltung bezüglich ihrer Gebrauchseigenschaften weiter zu verbessern.

Erfindungsgemäß wird dies durch die Merkmale des Anspruchs 1 erreicht. Vorteilhafte Ausgestaltungen sowie besondere Ausführungsformen sind Gegenstand der weiteren Ansprüche. Zudem wird Schutz auch für jede Kupplungshälfte allein mit den zugehörigen spezifischen Merkmalen, d. h. unabhängig von der jeweils anderen Kupplungshälfte, beansprucht.

Gemäß der Erfindung ist die Mehrfachkupplung zusätzlich zu den Hydraulik-Steckkupplungen mit einer Druckluft-Reinigungseinrichtung derart ausgestattet, dass während des Kuppelvorgangs über mindestens einen Druckluftanschluss zugeführte Druckluft selbsttätig so in Richtung über die Kupplungsflächen geleitet wird, dass die Kupplungsflächen im Bereich der Kupplungsteile, und zwar insbesondere die Kupplungsfläche mit den Muffenventilen, von eventuellen Verunreinigungen freiblasbar sind. Erfindungsgemäß weist dazu jede von mindestens zwei Führungsbohrungen des die Muffenventile tragenden Kupplungsträgers auf der der Kupplungsfläche gegenüberliegenden Seite einen Druckluftanschluss auf. Der andere, die Steckerventile tragende Kupplungsträger weist eine entsprechende Anzahl (mindestens zwei) von Führungsbolzen zum führenden und positionierenden Eingriff in die Führungsöffnungen auf. Dabei sind die Führungsbolzen als Luftleitungsstecker ausgebildet und weisen jeweils einen axialen, stirnendseitig offenen Kanal mit mindestens einer parallel zur Kupplungsfläche in Richtung zu den Kupplungsteilen ausgerichteten Queröffnung auf. Durch diese erfindungsgemäße Ausgestaltung wird beim Kuppelvorgang automatisch Druckluft so geführt und über die Kupplungsflächen geblasen, dass Verunreinigungen aus dem Stirnbereich der zu kuppelnden Kupplungsteile entfernt werden. Dies ist im Vergleich zu einem Abwischen mittels eines Lappens einfacher sowie auch sehr viel effektiver, weil ein Eindringen von Schmutz in Spaltbereiche praktisch ausgeschlossen ist.

Gemäß einem weiteren Erfindungsaspekt weist jedes Steckerventil in einem an den Kupplungsträger angrenzenden Fußbereich des Steckschaftes einen radialen, umlaufenden Ringansatz auf, der derart mit einem Überstand über die Kupplungsfläche des Kupplungsträgers vorsteht, dass in der Kupplungslage die Steckerteile mit ihren Ringansätzen zur abstützenden Anlage an der Kupplungsfläche des anderen, die Muffenteile aufweisenden Kupplungsträgers gelangen und dadurch die Kupplungsflächen der beiden Kupplungsträger in der Kupplungslage über einen Spalt voneinander beabstandet sind. Demnach stützen sich die beiden Kupplungsträger in der verbundenen und verriegelten Kupplungslage nicht direkt, sondern mittelbar über die Ringansätze der Steckerventile aneinander ab. Hierbei wirken die Ringansätze vorteilhafterweise auch als metallische Dichtungen gegen ein Eindringen von Schmutz in den Kupplungsbereich.

In zweckmäßiger Ausgestaltung weisen einerseits jedes Muffenventil einen beim Kuppeln verschiebbaren Ventilsitz und einen starren Ventilkörper sowie andererseits jedes Steckerventil einen starren Ventilsitz und einen verschiebbaren Ventilkörper auf. Jedem Ventilkörper ist eine vordere, stirnseitige Kreisfläche zugeordnet und jedem Ventilsitz eine vordere, stirnseitige, die jeweils zugehörige Kreisfläche konzentrisch umschließende Ringfläche. Die beschriebenen Flächen dienen zur gegenseitige Anlage zur Ventilbetätigung beim Kuppelvorgang. Hierbei liegt ein weiterer Erfindungsaspekt darin, dass bei jedem Muffenventil die Ventilkörper-Kreisfläche zumindest annähernd in einer gemeinsamen Ebene mit der Kupplungsfläche des Kupplungsträgers liegt, während aber die Ventilsitz-Ringfläche mit einem Überstand über die Kupplungsfläche und damit auch über die Kreisfläche vorsteht. Weiterhin steht bevorzugt auch bei jedem Steckerventil die Ventilkörper-Kreisfläche mit einem Überstand über die Ventilsitz-Ringfläche vor. Die genannten Überstände sind bevorzugt im Wesentlichen gleich groß. Diesem Erfindungsgedanken liegt die Erkenntnis zugrunde, dass bei dem eingangs erläuterten Stand der Technik, wobei muffenseitig alle Flächen übergangslos in einer gemeinsamen Ebene liegen sollen, ein Abwischen dieser Fläche sogar nachteilig ist, weil dadurch Schmutz gerade in die unvermeidbaren Ringspalte im stirnseitigen Muffenbereich hineingewischt werden kann. Im Gegensatz dazu bilden die muffenseitig vorstehenden Ringflächen eine Art "Schutzwall", der einen inneren Ringspalt vor Verschmutzung schützt. Außerdem wird durch die beschriebenen Überstände vorteilhafterweise auch eine Zentrierung und Positionierung der Kupplungsteile relativ zueinander beim Kuppelvorgang erreicht, indem die vorstehenden Ventilkörper-Kreisflächen der Steckerventile in die vorstehenden Ventilsitz-Ringflächen der Muffenventile eingreifen. Dennoch handelt es sich grundsätzlich um Flachdichtkupplungen, weil die Kupplungsteile beim Kuppeln mit ihren stirnseitigen Kreis- und Ringflächen jeweils flach aneinander liegen, wodurch Hohlräume vermieden werden, die sich beim Entkuppeln mit Hydraulikmedium füllen könnten, welches dann nach außen austreten würde. Somit wird eine weitgehende Leckagefreiheit erreicht.

Weitere besondere Ausführungen und Vorteile werden in der nachfolgenden Beschreibung noch erläutert werden, und zwar anhand eines in der Zeichnung veranschaulichten, bevorzugten Ausführungsbeispiels der Erfindung. Es zeigen:
- Fig. 1: eine Perspektivansicht einer ersten Kupplungshälfte, und zwar bevorzugt in Form eines geberseitigen, Hydraulik-Muffenventile aufweisenden Festteils zum Befestigen auf der Seite eines Druckgebers (Hydraulikpumpe),
- Fig. 2: eine Ausschnittvergrößerung des Bereichs II in Fig. 1,
- Fig.3: eine Perspektivansicht einer zweiten Kupplungshälfte, und zwar bevorzugt eines nehmerseitigen, Hydraulik-Steckerventile aufweisenden Losteils zur Verbindung mit Leitungen eines Anbaugerätes,
- Fig. 4: eine Ausschnittvergrößerung des Bereichs IV in Fig. 3,
- Fig. 5: eine Seitenansicht im Bereich eines der Steckerventile in Pfeilrichtung V gemäß Fig. 4,
- Fig.6: eine Perspektivansicht ähnlich Fig. 1 und 3, allerdings beider Kupplungshälften in einer Zwischenstellung beim Kuppeln bzw. Entkuppeln,
- Fig. 7: eine Seitenansicht in Pfeilrichtung VII gemäß Fig. 6,
- Fig. 8: eine Ausschnittvergrößerung des Bereichs VIII in Fig. 6,
- Fig. 9: eine vereinfachte Seitenansicht (ohne mechanische Betätigungseinrichtung) in einer Kuppel-Zwischenstellung,
- Fig. 10: einen vergrößerten Teil-Querschnitt in der Ebene X -X gemäß Fig. 9,
- Fig. 11: eine Ansicht wie in Fig. 9 in einer weiter gekuppelten Zwischenstellung,
- Fig. 12: einen vergrößerten Querschnitt in der Ebene XII - XII gemäß Fig. 11,
- Fig. 13: eine weitere Ansicht wie in Fig. 9 und 11 in der ganz gesteckten Kupplungslage,
- Fig. 14: einen vergrößerten Schnitt in der Ebene XIV - XIV in Fig. 13,
- Fig. 15 a-c: Querschnitte entsprechend den Ebenen XV - XV in Fig. 2 und 4 in verschiedenen Kuppelstellungen der Kupplungshälften zur Erläuterung einer erfindungsgemäßen Druckluft-Reinigungseinrichtung,

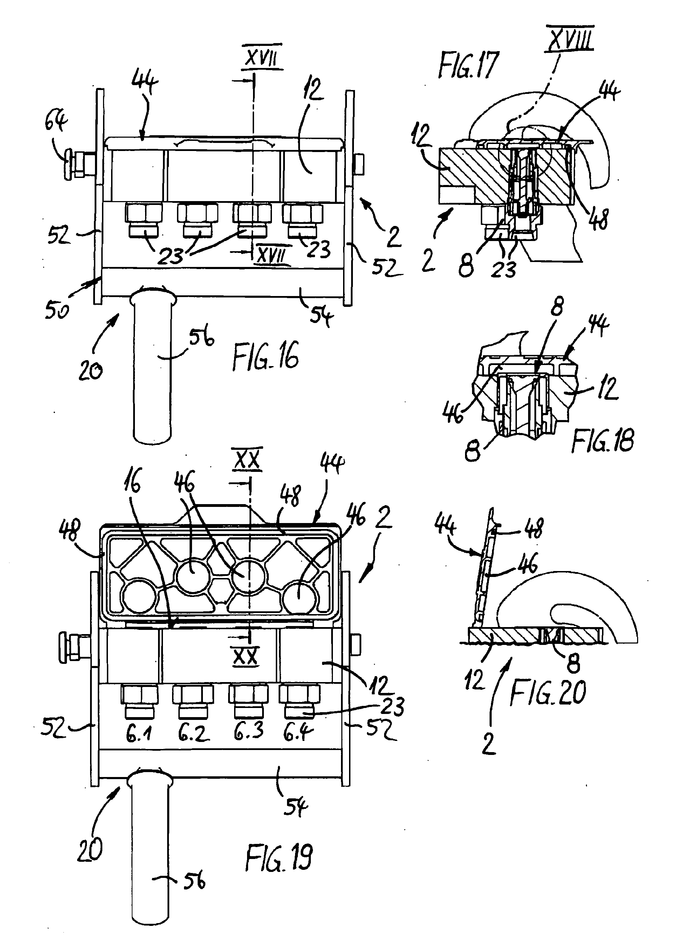

- Fig.16: eine weitere Seitenansicht der Festteil-Kupplungshälfte mit einem geschlossenen Schutzdeckel,
- Fig. 17: einen Schnitt in der Ebene XVII - XVII gemäß Fig. 16,
- Fig. 18: eine Ausschnittvergrößerung des Bereichs XVIII in Fig. 17,
- Fig. 19: eine Ansicht wie in Fig. 16, jedoch mit geöffnetem Schutzdeckel und
- Fig. 20: einen Querschnitt in der Ebene XX - XX in Fig. 19.

In den verschiedenen Figuren der Zeichnung sind gleiche Teile stets mit den gleichen Bezugszeichen versehen. Jede eventuell nur einmal unter Bezugnahme auf nur eine oder einen Teil der Zeichnungsfiguren vorkommende Beschreibung eines Teils gilt daher analog auch bezüglich der anderen Zeichnungsfiguren, in denen dieses Teil mit dem entsprechenden Bezugzeichen ebenfalls zu erkennen ist.

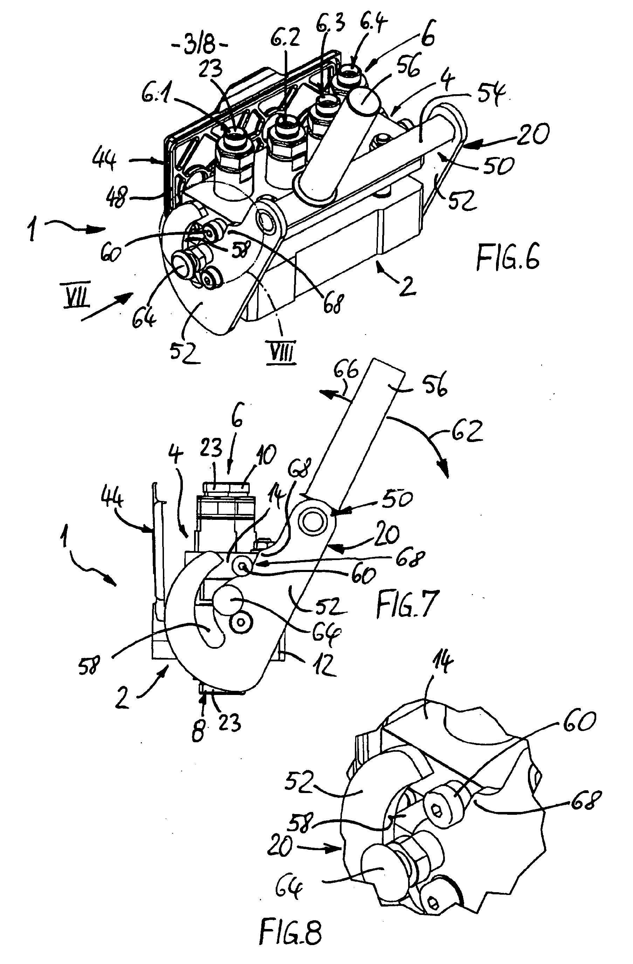

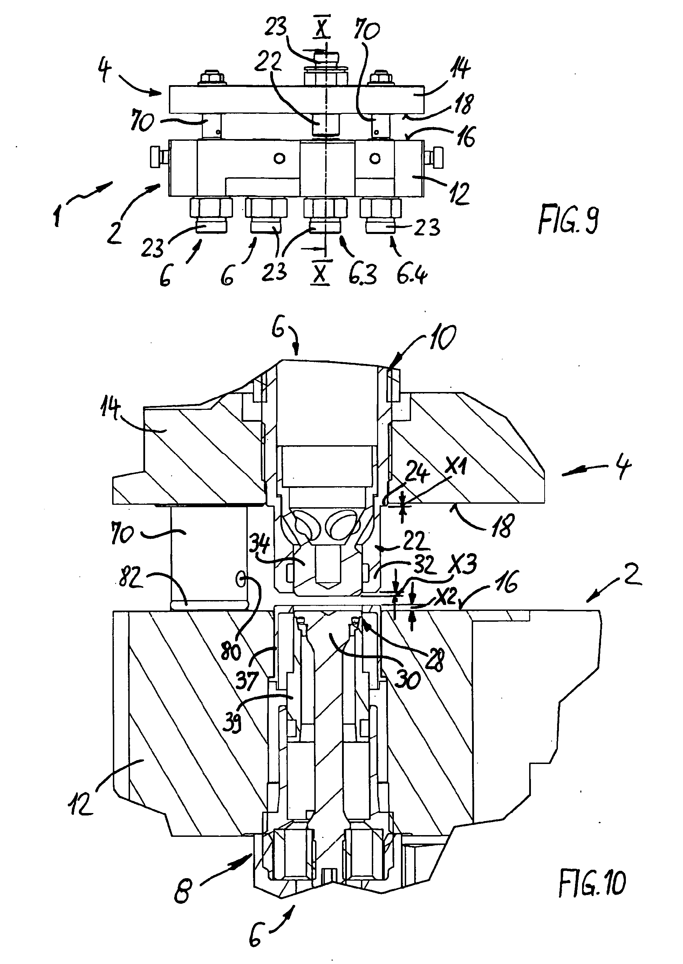

Eine Mehrfachkupplung 1 - siehe insbesondere Fig. 6 - besteht aus zwei Kupplungshälften 2 und 4. Bevorzugt ist die erste Kupplungshälfte 2 als geberseitiges Festteil zur Befestigung an einem Arbeitsfahrzeug ausgebildet, während die zweite Kupplungshälfte 4 ein nehmerseitiges Losteil eines nicht dargestellten Anbaugerätes bildet. Die Mehrfachkupplung 1 weist mindestens zwei (im dargestellten Beispiel vier) Hydraulik-Steckkupplungen 6 (6.1 bis 6.4; vgl. Fig. 6 und 9) auf. Zusätzlich können bei Bedarf auch elektrische Steckverbindungen vorgesehen sein (nicht dargestellt).

Jede Steckkupplung 6 besteht aus einem geberseitigen Kupplungsteil insbesondere in Form eines Muffenventils 8 und einem nehmerseitigen Kupplungsteil insbesondere in Form eines Steckerventils 10. Grundsätzlich wäre aber auch eine umgekehrte Anordnung der Muffen- und Steckerventile 8, 10 möglich.

Die Muffenventile 8 sind in Bohrungen eines ersten plattenförmigen Kupplungsträgers 12 und die Steckerventile 10 in Bohrungen eines zweiten plattenförmigen Kupplungsträgers 14 angeordnet. Die Kupplungsträger 12, 14 sind zum paarweisen Steckkuppeln der Kupplungsteile 8, 10 mit einander zugewandten Kupplungsflächen 16, 18 mittels einer mechanischen Betätigungseinrichtung 20, die im Folgenden noch genauer beschrieben wird, gegeneinander bewegbar und in einer Kupplungslage arretierbar. Jedes Steckerventil 10 weist einen über die Kupplungsfläche 18 des zugehörigen Kupplungsträgers 14 vorstehenden Steckschaft 22 zum Einstecken in das im Wesentlichen stirnseitig in der Kupplungsfläche 16 des zugehörigen anderen Kupplungsträgers 12 liegende Muffenventil 8 auf. Alle Kupplungsteile 8,10 weisen rückseitig Anschlüsse 23 für nicht dargestellte Hydraulik-Schlauchleitungen auf.

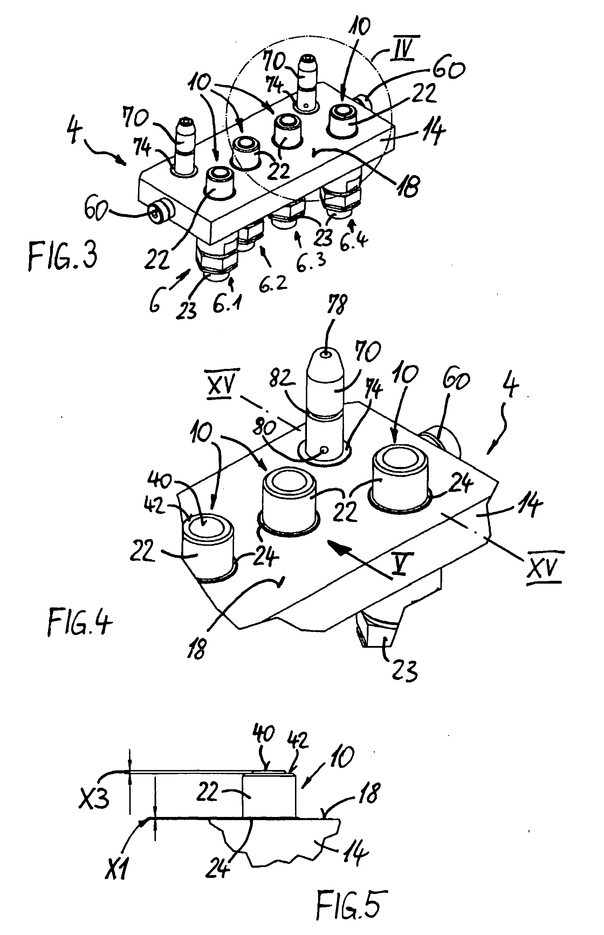

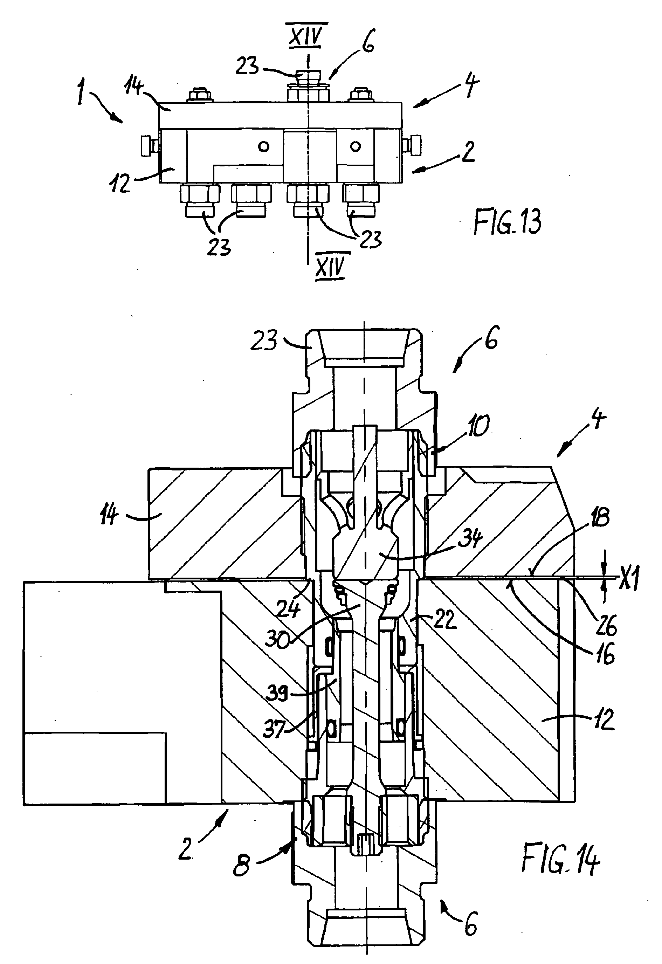

Mit Vorteil weist jedes Steckerventil 10 in einem an den Kupplungsträger 14 angrenzenden Fußbereich des Steckschaftes 22 einen radialen, umlaufenden Ringansatz 24 auf, der gemäß Fig. 5 derart mit einem Überstand X1 über die Kupplungsfläche 18 des Kupplungsträgers 14 vorsteht, dass in der Kupplungslage die Steckerventile 10 mit ihren Ringansätzen 24 zur abstützenden Anlage an der Kupplungsfläche 16 des anderen, die Muffenventile 8 aufweisenden Kupplungsträgers 12 gelangen. Dadurch sind in der Kupplungslage - siehe insbesondere Fig. 14 - die Kupplungsflächen 16, 18 der beiden Kupplungsträger 12, 14 über einen Spalt 26 voneinander beabstandet, der durch den Überstand X1 bestimmt ist. Vorzugsweise liegt der Überstand X1 der Ringansätze 24 über die Kupplungsfläche 18 in der Größenordnung von etwa 0,5 mm, was entsprechend auch für die Weite des Spaltes 26 zwischen den Kupplungsflächen 16, 18 in der Kupplungslage gilt.

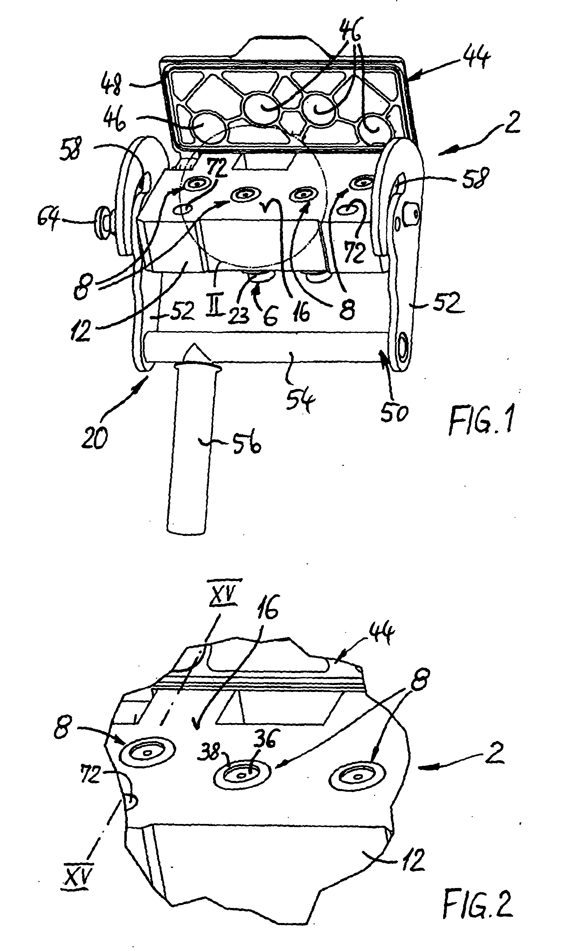

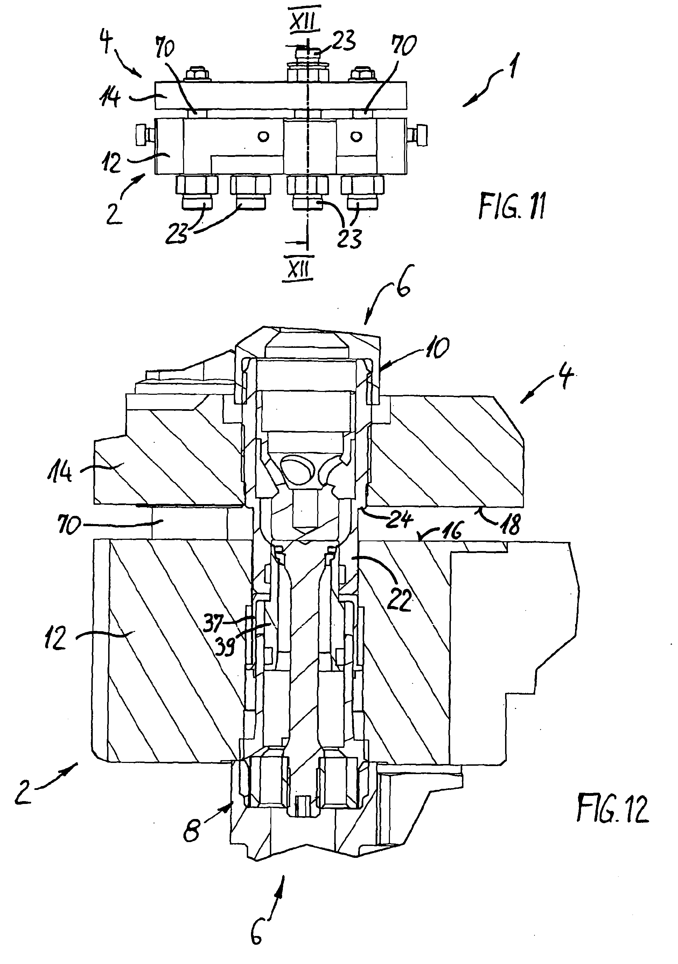

Wie sich insbesondere aus Fig. 10 ergibt, weist jedes Muffenventil 8 einen beim Kuppeln verschiebbaren Ventilsitz 28 und einen starren, unbeweglichen Ventilkörper 30 auf. Jedes Steckerventil 10 weist dem gegenüber einen starren Ventilsitz 32 und einen verschiebbaren Ventilkörper 34 auf. Bei den Muffenventilen 8 - siehe hierzu insbesondere Fig. 2 - ist dem starren Ventilkörper 30 eine vordere, stirnseitige Kreisfläche 36 zugeordnet, und dem beweglichen Ventilsitz 28 ist eine vordere, stirnseitige, die zugehörige Kreisfläche 36 konzentrisch umschließende Ringfläche 38 zugeordnet. Diese Ringfläche 38 wird unmittelbar von der angrenzenden Kupplungsfläche 16 des ersten Kupplungsträgers 12 umgeben. Dies bedeutet, dass jedes Muffenteil 8 - in Abweichung von dem eingangs erläuterten Stand der Technik gemäß EP 0 522 493 B2 - kein eigenes Gehäuse mit einem versenkt in dem Kupplungsträger 12 sitzenden Umfangsflansch aufweist. Vielmehr bildet der Kupplungsträger 12 praktisch ein Gehäuse für die Muffenventile 8, indem deren inneren Funktionsteile jeweils direkt in Bohrungen des Kupplungsträgers 12 sitzen. Jedem Ventilsitz 28 ist eine verschiebbare Hülse 37 zugeordnet, die die besagte Ringfläche 38 aufweist und beim Kuppeln von dem Steckerventil 10 verschoben wird, bis sie das eigentliche Ventilsitzelement 39 zum Öffnen des Ventils mitnimmt. Hierzu wird auf die Figuren 10, 12 und 14 verwiesen.

Bei den Steckerventilen 10 - siehe insbesondere Fig. 4 - weist der bewegliche Ventilkörper 34 eine entsprechende vordere, stirnseitige Kreisfläche 40 auf, während dem starren Ventilsitz 32 eine vordere, stirnseitige, die zugehörige Kreisfläche 40 konzentrisch umschließende Ringfläche 42 zugeordnet ist. Über die genannten Kreisflächen 36, 40 und Ringflächen 38, 42 gelangen die Kupplungsteile beim Kuppeln zur gegenseitigen Anlage zwecks Öffnungsbetätigung der Ventile bei der Kuppelbewegung (Fig. 10, 12, 14).

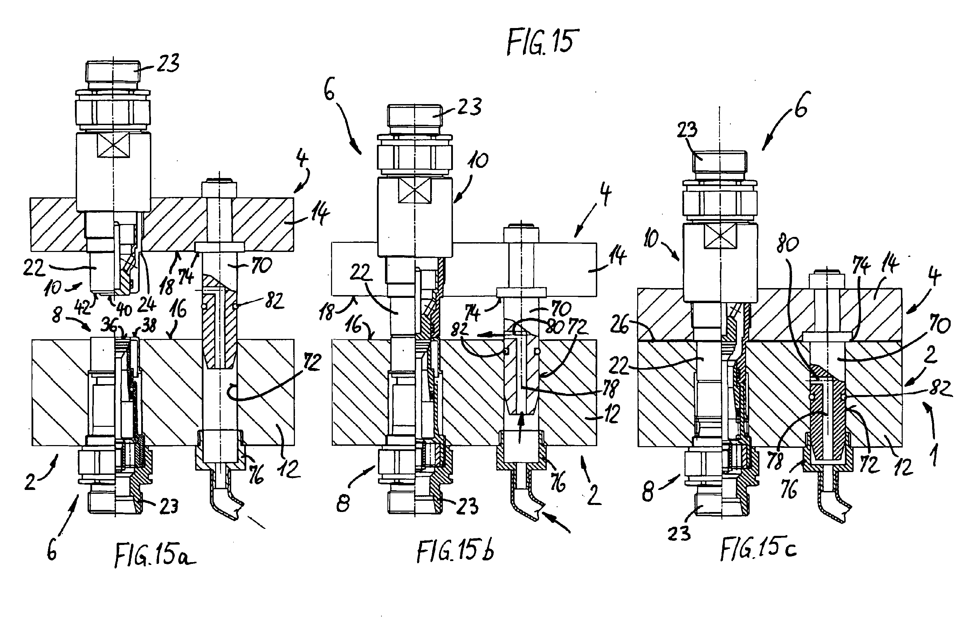

Wie sich nun am Besten aus den Fig. 10 und 15a ergibt, liegt bei jedem Muffenventil 8 die Ventilkörper-Kreisfläche 36 vorzugsweise zumindest annähernd in einer gemeinsamen Ebene mit der Kupplungsfläche 16 des Kupplungsträgers 12, während die Ventilsitz-Ringfläche 38 mit einem Überstand X2 über die Kupplungsfläche 16 und damit auch über die Kreisfläche 36 vorsteht. Dem gegenüber steht bei jedem Steckerventil 10 die Ventilkörper-Kreisfläche 40 mit einem Überstand X3 über die Ventilsitz-Ringfläche 42 vor. Die genannten Überstände X2 und X3, die nur in Fig. 10 eingezeichnet sind, sind vorzugsweise etwa gleich groß und liegen insbesondere jeweils in der Größenordnung von etwa 1 mm.

Die Wirkungen und Vorteile dieser Ausgestaltung wurden eingangs bereits eingehend erläutert. Die Zentrierwirkung durch die vorstehenden und in die Ringflächen 38 der Muffenventile 8 eingreifenden Stecker-Kreisflächen ergibt sich insbesondere aus Fig. 15b.

In vorteilhafter Ausgestaltung ist der die Muffenteile 8 aufweisende Kupplungsträger 12 des Festteils mit einem Schutzdeckel 44 ausgestattet. Hierzu wird auf die Figuren 1, 6 und insbesondere 16 bis 20 verwiesen. Der Schutzdeckel 20 ist als einseitig schwenkbar gelagerter Klappdeckel ausgebildet, der in der entkuppelten Lage selbsttätig durch Federkraft schließt und die Kupplungsfläche 16 mit den Stirnseiten der Muffenventile 8 überdeckt. Hierbei weist der Schutzdeckel 44 eine innere Dichtkontur mit Vertiefungen 46 zum Übergreifen der über die Kupplungsfläche 16 vorstehenden Ventilsitz-Ringflächen 38 der Muffenventile 8 auf. Außerdem weist der Schutzdeckel 44 eine randliche, umlaufende Dichtung 48 zur dichtenden Auflage auf dem Randbereich der Kupplungsfläche 16 auf.

Die schon kurz erwähnte Betätigungseinrichtung 20 ist bei dem dargestellten, bevorzugten Ausführungsbeispiel als Hebelverriegelung mit einem an dem Kupplungsträger 12 des Festteils bzw. der ersten Kupplungshälfte 2 schwenkbar gelagerten Hebelelement 50 ausgebildet. Dieses Hebelelement 50 besteht aus zwei seitlichen Hebelschenkeln 52, die jeweils beidseitig des ersten Kupplungsträgers 12 an diesem schwenkbar gelagert und in ihren freien Endbereichen über eine Querstange 54 verbunden sind. An der Querstange 54 ist ein Handgriff 56 befestigt. Die beiden Hebelschenkel 52 bestehen bevorzugt aus Flachmetall und weisen jeweils einen kurvenförmigen Riegelschlitz 58 zur Aufnahme von seitlichen Riegelelementen 60 des anderen Kupplungsträgers 14 der Kupplungshälfte 4 derart auf, dass durch Verschwenken des Hebelelementes 50 aus einer Lösestellung (vgl. Fig. 6 und 7) in Pfeilrichtung 62 in eine Riegelstellung über die sich relativ in den Riegelschlitzen 58 bewegenden Riegelelemente 60 die Kupplungsträger 12 und 14 zusammengeführt werden. Dazu weisen die Riegelschlitze 58 einen entsprechenden Krümmungsverlauf auf. In der ganz gekuppelten Kupplungslage wird das Hebelelement 50 über eine Verriegelung arretiert, wobei diese Verriegelung über einen Löseknopf 64 entriegelbar ist. Gemäß einer besonderen Ausgestaltung ist das Hebelelement 50 bzgl. seiner Bewegung in Löserichtung (Pfeilrichtung 66 in Fig. 7) über einen Endanschlag 68 definiert in einer ein Trennen der Kupplungsträger, d. h. ein Abheben des Losteil-Kupplungsträgers 14, ermöglichenden Lösestellung begrenzt. Gemäß Fig. 6 bis 8 kann der Endanschlag 68 mit Vorteil durch mindestens einen an die offene Seite des zugehörigen Riegelschlitzes 58 wenigstens eines der Hebelschenkel 52 angrenzenden Anschlagansatz 68 gebildet sein, der in der beschriebenen Lösestellung zur Anlage an dem Riegelelement 60 gelangt. Vorzugsweise ist jeder der beiden Hebelschenkel 52 mit einem entsprechenden Anschlagansatz 68 ausgebildet, die dann an beiden Riegelelementen 60 zur bewegungsbegrenzenden Anlage gelangen, siehe Fig. 7 und 8. Durch diese vorteilhafte Ausgestaltung ist beim Lösen jedenfalls gewährleistet, dass das Hebelelement 50 eine Stellung einnimmt, in der - siehe Fig. 7 - die zweite Kupplungshälfte 4 von der ersten Kupplungshälfte 2 abgenommen werden kann.

In einer weiteren vorteilhaften Ausgestaltung weist der die Steckerventile 10 halternde Kupplungsträger 14 (mindestens) zwei Führungsbolzen 70 auf, die sich senkrecht zur Kupplungsfläche 18 erstrecken. Der andere, die Muffenventile 8 aufweisende Kupplungsträger 12 weist korrespondierende Führungsbohrungen 72 zum positionierenden und führenden Eingriff der Führungsbolzen 70 auf. Hierzu wird insbesondere auf Fig. 15 verwiesen. Jeder Führungsbolzen 70 weist in seinem an den Kupplungsträger 14 bzw. dessen Kupplungsfläche 18 angrenzende Fußbereich einen radialen, umlaufenden Ringansatz 74 auf, der - analog zu den Ringansätzen 24 der Steckerventile 10 - in der Kupplungslage zur abstützenden Anlage an der Kupplungsfläche 16 des anderen Kupplungsträgers 12 gelangt. Die Ringansätze 54 stehen somit mit einem entsprechenden Überstand X1 über die Kupplungsfläche 18 vor.

Die erfindungsgemäße Mehrfachkupplung 1 ist mit einer zusätzlichen Druckluft-Reinigungseinrichtung derart ausgestattet, dass während des Kuppelvorgangs über mindestens einen Druckluftanschluss 76 zugeführte Druckluft selbsttätig so in Richtung über die Kupplungsflächen 16, 18 geleitet wird, dass insbesondere die Kupplungsfläche 16 im Bereich der Muffenventile 8 von eventuellen Verunreinigungen freigeblasen wird. In der bevorzugten Ausführungsform - siehe hierzu insbesondere Fig. 15 - weist jede Führungsbohrung 72 auf ihrer der Kupplungsfläche 16 gegenüberliegenden Seite einen Druckluftanschluss 76 auf. Die Führungsbolzen 70 sind als Luftleitungsstecker ausgebildet und weisen dazu jeweils einen axialen, stimendseitig offenen Kanal 78 mit einer parallel zu den Kupplungsflächen 16, 18 in Richtung zu den Kupplungsteilen 8, 10 ausgerichteten Queröffnung 80 auf. Ferner weist jeder Führungsbolzen 70 im axial zwischen der Queröffnung 80 und dem freien, offenen Ende liegenden Bereich seiner Umfangsfläche einen Dichtring 82 auf. Wie sich aus Fig. 15b ergibt, wird durch diese Ausgestaltung beim Kuppelvorgang Druckluft in Richtung der eingezeichneten Pfeile über den jeweiligen Druckluftanschluss 76 und den Führungsbolzen 70 durch den Kanal 78 und die Queröffnung 80 über die Kupplungsfläche 16 geblasen, wodurch Verunreinigungen entfernt werden.

## Patentansprüche

1. Mehrfachkupplung (1) mit mindestens zwei Hydraulik-Steckkupplungen (6), wobei jede Steckkupplung (6) aus einem geberseitigen Kupplungsteil und einem nehmerseitigen Kupplungsteil besteht, wobei die als Muffenventil (8) und Steckerventil (10) ausgebildeten, zum Kuppeln gegenseitig dichtend ineinandersteckbaren Kupplungsteile in einem entkuppelten Zustand selbsttätig schließen und sich beim Kuppeln gegenseitig öffnen, wobei die geberseitigen Kupplungsteile (8) in einem ersten Kupplungsträger (12) und die nehmerseitigen Kupplungsteile (10) entsprechend gegenüberliegend in einem zweiten Kupplungsträger (14) gehaltert sind, wobei die Kupplungsträger (12, 14) zum paarweisen Steck-Kuppeln der Kupplungsteile (8, 10) mit einander zugewandten Kupplungsflächen (16, 18) mittels einer Betätigungseinrichtung (20) gegeneinander bewegbar und in einer Kupplungslage arretierbar sind, wobei jedes Steckerventil (10) einen über die Kupplungsfläche (18) des zugehörigen Kupplungsträgers (14) vorstehenden Steckschaft (22) zum Einstecken in das im Wesentlichen stirnseitig in der Kupplungsfläche (16) des zugehörigen Kupplungsträgers (12) liegende Muffenventil (8) aufweist, **gekennzeichnet durch** eine Druckluft-Reinigungseinrichtung derart, dass während des Kuppelvorgangs über mindestens einen Druckluftanschluss (76) zugeführte Druckluft so in Richtung über die Kupplungsflächen (16, 18) geleitet wird, dass die Kupplungsflächen (16, 18) im Bereich der Kupplungsteile (8, 10) von eventuellen Verunreinigungen freiblasbar sind, wobei einer der Kupplungsträger (12, 14), insbesondere der die Steckventile (10) halternde Kupplungsträger (14), mindestens zwei Führungsbolzen (70) und der andere Kupplungsträger, insbesondere der die Muffenventile (8) halternde Kupplungsträger (12), korrespondierende Führungsbohrungen (72) zum positionierenden und führenden Eingriff der Führungsbolzen (70) aufweisen, und wobei wenigstens eine, bevorzugt jede Führungsbohrung (72) auf ihrer der Kupplungsfläche (16) gegenüberliegenden Seite einen Druckluftanschluss (76) aufweist, wobei die Führungsbolzen (70) als Luftleitungsstecker ausgebildet sind und jeweils einen axialen, stimendseitig offenen Kanal (78) mit einer parallel zur Kupplungsfläche (16/18) in Richtung zu den Kupplungsteilen (8, 10) ausgerichteten Queröffnung (80) aufweisen.

2. Mehrfachkupplung nach Anspruch 1,
**dadurch gekennzeichnet, dass** jederFührungsbolzen(70)im axial zwischen der Queröffnung (80) und dem freien, offenen Ende liegenden Bereich seiner Umfangsfläche einen Dichtring (82) aufweist.

3. Mehrfachkupplung nach Anspruch 1 oder 2,
**dadurch gekennzeichnet, dass** jedesSteckerventil(10)in einem an den Kupplungsträger (14) angrenzenden Fußbereich des Steckschaftes (22) einen radialen, umlaufenden Ringansatz (24) aufweist, der derart mit einem Überstand (X1) über die Kupplungsfläche (18) des Kupplungsträgers (14) vorsteht, dass in der Kupplungslage die Steckerventile (10) mit ihren Ringansätzen (24) zur abstützenden Anlage an der Kupplungsfläche (16) des anderen, die Muffenventile (8) aufweisenden Kupplungsträgers (12) gelangen.

4. Mehrfachkupplung nach Anspruch 3,
**dadurch gekennzeichnet, dass** derÜberstand(X1)der Ringansätze (24) über die Kupplungsfläche (18) - und **dadurch** auch ein Spalt (26) zwischen den Kupplungsflächen (16, 18) der gekuppelten Kupplungsträger (12, 14) - etwa in der Größenordnung von etwa 0,5 mm liegt.

5. Mehrfachkupplung nach einem der Ansprüche 1 bis 4,
**dadurch gekennzeichnet, dass** jedes Muffenventil (8) einen beim Kuppeln verschiebbaren Ventilsitz (28) und einen starren Ventilkörper (30) sowie jedes Steckerventil (10) einen starren Ventilsitz (32) und einen verschiebbaren Ventilkörper (34) aufweisen, wobei jedem Ventilkörper (30, 34) eine vordere, stirnseitige Kreisfläche (36, 40) und jedem Ventilsitz (28, 32) eine vordere, stirnseitige, die jeweils zugehörige Kreisfläche (36, 40) konzentrisch umschließende Ringfläche (38, 42) zugeordnet sind.

6. Mehrfachkupplung nach Anspruch 5,
**dadurch gekennzeichnet, dass** bei jedem Muffenventil (8) die Ventilsitz-Ringfläche (38) mit einem Überstand (X2) über die Kupplungsfläche (16) vorsteht, während vorzugsweise die Ventilkörper-Kreisfläche (36) zumindest annähernd in einer gemeinsamen Ebene mit der Kupplungsfläche (16) des Kupplungsträgers (12) liegt.

7. Mehrfachkupplung nach Anspruch 5 oder 6,
**dadurch gekennzeichnet, dass** beijedemSteckerventil(10)die Ventilkörper-Kreisfläche (40) mit einem Überstand (X3) über die Ventilsitz-Ringfläche (42) vorsteht.

8. Mehrfachkupplung nach Anspruch 6 und 7,
**dadurch gekennzeichnet, dass** die Überstände (X2, X3) etwa gleich groß sind und insbesondere jeweils etwa in der Größenordnung von 1 mm liegen.

9. Mehrfachkupplung nach einem der Ansprüche 1 bis 8,
**dadurch gekennzeichnet, dass** der die Muffenventile (8) aufweisende Kupplungsträger (12) einen Schutzdeckel (44) aufweist, der einseitig schwenkbar gelagert ist und in der entkuppelten Lage selbsttätig schließt und die Kupplungsfläche (16) mit den Stirnseiten der Muffenventile (8) überdeckt.

10. Mehrfachkupplung nach Anspruch 9,
**dadurch gekennzeichnet, dass** der Schutzdeckel (44) eine innere Dichtkontur mit Vertiefungen (46) zum Übergreifen der über die Kupplungsfläche (16) vorstehenden Ventilsitz-Ringflächen (38) der Muffenventile (8) aufweist.

11. Mehrfachkupplung nach Anspruch 9 oder 10,
**dadurch gekennzeichnet, dass** der Schutzdeckel (44) eine randliche, umlaufende Dichtung (48) zur dichtenden Auflage auf der Kupplungsfläche (16) aufweist.

12. Mehrfachkupplung nach einem der Ansprüche 1 bis 11,
**dadurch gekennzeichnet, dass** die Betätigungseinrichtung (20) als mechanische Hebelverrieglung mit einem an dem einen Kupplungsträger (12) schwenkbar gelagerten Hebelelement (50) ausgebildet ist, wobei das Hebelelement (50) zwei seitliche Hebelschenkel (52) mit kurvenförmigen Riegelschlitzen (58) zur Aufnahme von seitlichen Riegelelementen (60) des anderen Kupplungsträgers (14) derart aufweist, dass durch Verschwenken des Hebelelementes (50) aus einer Lösestellung in eine Riegelstellung über die sich relativ in den Riegelschlitzen (58) bewegenden Riegelelemente (60) die Kupplungsträger (12, 14) zusammengeführt werden.

13. Mehrfachkupplung nach Anspruch 12,
**dadurch gekennzeichnet, dass** das Hebelelement (50) bezüglich seiner Bewegung in Löserichtung (66) über einen Endanschlag (68) definiert in einer ein Trennen der Kupplungsträger (12, 14) ermöglichenden Lösestellung begrenzt ist.

14. Mehrfachkupplung nach Anspruch 13,
**dadurch gekennzeichnet, dass** derEndanschlag(64)durch mindestens einen an die offene Seite des zugehörigen Riegelschlitzes (58) des Hebelschenkels (52) angrenzenden Anschlagansatz (68) gebildet ist, der in der Lösestellung zur Anlage an dem Riegelelement (60) gelangt.

15. Mehrfachkupplung nach einem der Ansprüche 1 bis 14,
**dadurch gekennzeichnet, dass** jederFührungsbolzen(70)in seinem an den Kupplungsträger (14) angrenzenden Fußbereich einen radialen, umlaufenden Ringansatz (74) aufweist, der - analog zu den Ringansätzen (24) der Steckerventile (10) - in der Kupplungslage zur abstützenden Anlage an der Kupplungsfläche (16) des anderen Kupplungsträgers (12) gelangt.

16. Kupplungshälfte (2 oder 4) einer Mehrfachkupplung (1) nach einem der Ansprüche 1 bis 15, bestehend aus einem Kupplungsträger (12 oder 14) mit mindestens zwei als Muffenventile (8) oder als Steckerventile (10) ausgebildeten Hydraulik-Kupplungsteilen,
**dadurch gekennzeichnet, dass** der Kupplungsträger (12 oder 14) mindestens zwei Führungsbolzen (70) zum Eingriff in jeweils eine korrespondierende Führungsbohrung (72) eines weiteren, Steckerventile (10) oder Muffenventile (8) aufweisenden Kupplungsträgers (14 oder 12) aufweist, wobei die Führungsbolzen (70) als Luftleitungsstecker jeweils mit einem axialen, stimendseitig offenen Kanal (78) mit einer parallel zur Kupplungsfläche (18) in Richtung zu den Muffenventilen (8) bzw. den Steckerventilen (10) ausgerichteten Queröffnung (80) ausgebildet sind.

## Claims

1. Multiple coupling (1) with at least two hydraulic plug-in couplings (6), each plug-in coupling (6) comprising a transmitting-side coupling part and a receiving-side coupling part, the coupling parts, which are formed as a socket valve (8) and a plug valve (10) and for coupling can be plugged one into the other in a mutually sealing manner, automatically closing in an uncoupled state and mutually opening on coupling, the transmitting-side coupling parts (8) being mounted in a first coupling carrier (12) and the receiving-side coupling parts (10) being mounted in a correspondingly opposite manner in a second coupling carrier (14), the coupling carriers (12, 14) for the paired plug-in coupling of the coupling parts (8, 10) being movable towards one another with mutually facing coupling surfaces (16, 18) by means of an actuating device (20) and lockable in a coupling position, each plug valve (10) having a plug-in shank (22) which projects above the coupling surface (18) of the associated coupling carrier (14) and serves for plugging into the socket valve (8) lying substantially at the front side in the coupling surface (16) of the associated coupling carrier (12),
**characterised by** a compressed-air cleaning device such that compressed air supplied during the coupling operation via at least one compressed-air connection (76) is directed over the coupling surfaces (16, 18) in such a manner that any impurities are blown off the coupling surfaces (16, 18) in the region of the coupling parts (8, 10), one of the coupling carriers (12, 14), in particular the coupling carrier (14) in which the plug valves (10) are mounted, having at least two guide pins (70) and the other coupling carrier, in particular the coupling carrier (12) in which the socket valves (8) are mounted, having corresponding guide bores (72) for the positioning and guiding engagement of the guide pins (70), and at least one, preferably each, guide bore (72) having a compressed-air connection (76) on its side opposite the coupling surface (16), the guide pins (70) being formed as air-conducting plugs and in each case having an axial duct (78) which is open at the front end side and has a transverse opening (80) oriented parallel to the coupling surface (16/18) in the direction towards the coupling parts (8, 10).

2. Multiple coupling according to Claim 1,
**characterised in that** each guide pin (70) has a sealing ring (82) in its circumferential-surface region lying axially between the transverse opening (80) and the free, open end.

3. Multiple coupling according to Claim 1 or 2,
**characterised in that** each plug valve (10) has, in a foot region of the plug-in shank (22) adjacent to the coupling carrier (14), a radial, encircling annular collar (24) which projects with a projecting length (X1) above the coupling surface (18) of the coupling carrier (14) in such a manner that in the coupling position the plug valves (10) come, by way of their annular collars (24), into supporting abutment against the coupling surface (16) of the other coupling carrier (12) having the socket valves (8).

4. Multiple coupling according to Claim 3,
**characterised in that** the projecting length (X1) of the annular collars (24) above the coupling surface (18) - and thereby also a gap (26) between the coupling surfaces (16, 18) of the coupled coupling carriers (12, 14) - is approximately of the order of about 0.5 mm.

5. Multiple coupling according to one of Claims 1 to 4,
**characterised in that** each socket valve (8) has a valve seat (28) which is displaceable on coupling and a rigid valve body (30), and each plug valve (10) has a rigid valve seat (32) and a displaceable valve body (34), a front, end-side circular surface (36, 40) being assigned to each valve body (30, 34) and a front, end-side annular surface (38, 42) which concentrically encloses the respectively associated circular surface (36, 40) being assigned to each valve seat (28, 32).

6. Multiple coupling according to Claim 5,
**characterised in that**, in the case of each socket valve (8), the valve-seat annular surface (38) projects with a projecting length (X2) above the coupling surface (16), while the valve-body circular surface (36) preferably lies approximately in a common plane with the coupling surface (16) of the coupling carrier (12).

7. Multiple coupling according to Claim 5 or 6,
**characterised in that**, in the case of each plug valve (10), the valve-body circular surface (40) projects with a projecting length (X3) above the valve-seat annular surface (42).

8. Multiple coupling according to Claim 6 and 7,
**characterised in that** the projecting lengths (X2, X3) are approximately commensurate and in particular are each approximately of the order of 1 mm.

9. Multiple coupling according to one of Claims 1 to 8,
**characterised in that** the coupling carrier (12) having the socket valves (8) has a protective cover (44) which is mounted pivotably on one side and in the uncoupled position automatically closes and covers the coupling surface (16) with the front sides of the socket valves (8).

10. Multiple coupling according to Claim 9,
**characterised in that** the protective cover (44) has an inner sealing contour with depressions (46) for engaging over the valve-seat annular surfaces (38) of the socket valves (8) projecting above the coupling surface (16).

11. Multiple coupling according to Claim 9 or 10,
**characterised in that** the protective cover (44) has a marginal, encircling seal (48) for sealing abutment on the coupling surface (16).

12. Multiple coupling according to one of Claims 1 to 11,
**characterised in that** the actuating device (20) is formed as a mechanical lever latching device with a lever element (50) mounted pivotably on one coupling carrier (12), the lever element (50) having two lateral lever limbs (52) with curved latching slots (58) for receiving lateral latching elements (60) of the other coupling carrier (14) in such manner that by pivoting the lever element (50) from a release position into a latching position the coupling carriers (12, 14) are brought together via the latching elements (60) moving relatively in the latching slots (58).

13. Multiple coupling according to Claim 12,
**characterised in that** the lever element (50) is limited, with respect to its movement in the release direction (66), in a defined manner via an end stop (68) in a release position enabling separation of the coupling carriers (12, 14).

14. Multiple coupling according to Claim 13,
**characterised in that** the end stop (64) is formed by at least one stop lug (68) which is adjacent to the open side of the associated latching slot (58) of the lever limb (52) and comes into abutment against the latching element (60) in the release position.

15. Multiple coupling according to one of Claims 1 to 14,
**characterised in that** each guide pin (70) has, in its foot region adjacent to the coupling carrier (14), a radial, encircling annular collar (74) which - analogously to the annular collars (24) of the plug valves (10) - comes into supporting abutment against the coupling surface (16) of the other coupling carrier (12) in the coupling position.

16. Coupling half (2 or 4) of a multiple coupling (1) according to one of Claims 1 to 15, comprising a coupling carrier (12 or 14) with at least two hydraulic coupling parts formed as socket valves (8) or as plug valves (10), **characterised in that** the coupling carrier (12 or 14) has at least two guide pins (70) for engagement in respectively one corresponding guide bore (72) of a further coupling carrier (14 or 12) having plug valves (10) or socket valves (8), the guide pins (70) being formed as air-conducting plugs in each case with an axial duct (78) which is open at the front end side and has a transverse opening (80) oriented parallel to the coupling surface (18) in the direction towards the socket valves (8) and the plug valves (10), respectively.

## Revendications

1. Accouplement multiple (1) comprenant au moins deux accouplements enfichables hydrauliques (6), chaque accouplement enfichable (6) comprenant une partie d'accouplement côté transmetteur et une partie d'accouplement côté récepteur, les parties d'accouplement conçues sous forme de soupape à manchon (8) et de soupape à fiche (10), pouvant être emboîtées l'une dans l'autre de façon réciproquement étanche pour l'accouplement se fermant automatiquement dans un état désaccouplé et s'ouvrant réciproquement lors de l'accouplement, les parties d'accouplement (8) côté transmetteur étant logées dans un premier support d'accouplement (12) et les parties d'accouplement (10) côté récepteur étant logées de façon appropriée en se faisant face dans un second support d'accouplement (14), les supports d'accouplement (12, 14) pouvant être déplacés les uns par rapport aux autres au moyen d'un dispositif d'actionnement (20) pour l'accouplement enfichable par paires des parties d'accouplement (8, 10) avec des surfaces d'accouplement (16, 18) associées les unes aux autres et pouvant être arrêtés dans une position d'accouplement, chaque soupape à fiche (10) présentant une tige enfichable (22) dépassant de la surface d'accouplement (18) du support d'accouplement (14) spécifique pour l'enfichage dans la soupape à manchon (8) située essentiellement côté avant dans la surface d'accouplement (16) du support d'accouplement (12) spécifique,
**caractérisé par** un dispositif de nettoyage à air comprimé de telle sorte que, pendant l'opération d'accouplement, de l'air comprimé amené par au moins un branchement d'air comprimé (76) est guidé en direction au-dessus des surfaces d'accouplement (16, 18), de sorte que les surfaces d'accouplement (16, 18) peuvent être débarrassées d'éventuelles impuretés par soufflage dans la zone des parties d'accouplement (8, 10), l'un des supports d'accouplement (12, 14), en particulier le support d'accouplement (14) supportant les soupapes à fiche (10), présentant au moins deux boulons de guidage (70) et l'autre support d'accouplement, en particulier le support d'accouplement (12) logeant les soupapes à manchon (8), présentant des perçages de guidage (72) correspondants pour l'engagement de positionnement et de guidage des boulons de guidage (70), et au moins un, de préférence chaque perçage de guidage (72) présentant un branchement d'air comprimé (76) sur son côté opposé à la surface d'accouplement (16), les boulons de guidage (70) étant conçus sous forme de fiche de conduite d'air et présentant chacun un canal (78) axial, ouvert côté extrémité avant avec une ouverture transversale (80) orientée parallèlement à la surface d'accouplement (16/18) en direction des parties d'accouplement (8, 10).

2. Accouplement multiple selon la revendication 1,
**caractérisé en ce que** chaque boulon de guidage (70) présente une bague d'étanchéité (82) dans la zone de sa surface périphérique qui est située axialement entre l'ouverture transversale (80) et l'extrémité libre et ouverte.

3. Accouplement multiple selon la revendication 1 ou 2, **caractérisé en ce que** chaque soupape à fiche (10) présente une embase annulaire (24) radiale et périphérique dans une zone de base, contiguë au support d'accouplement (14), de la tige d'enfichage (22), laquelle embase dépasse avec un débordement (X1) de la surface d'accouplement (18) du support d'accouplement (14) de telle sorte que, dans la position d'accouplement, les soupapes à fiche (10) viennent s'appuyer avec leurs embases annulaires (24) sur la surface d'accouplement (16) de l'autre support d'accouplement (12) présentant les soupapes à manchon (8).

4. Accouplement multiple selon la revendication 3,
**caractérisé en ce que** le débordement (X1) des embases annulaires (24) de la surface d'accouplement (18) - et de ce fait également une fente (26) entre les surfaces d'accouplement (16, 18) des supports d'accouplement (12, 14) couplés - se situe aux environs de 0,5 mm.

5. Accouplement multiple selon l'une quelconque des revendications 1 à 4,
**caractérisé en ce que** chaque soupape à manchon (8) présente un siège de soupape (28) coulissant lors de l'accouplement et un corps de soupape (30) rigide et chaque soupape à fiche (10) présente un siège de soupape (32) rigide et un corps de soupape (34) coulissant, une surface circulaire (36, 40) avant, côté frontal, étant attribuée à chaque corps de soupape (30, 34) et une surface annulaire (38, 42) avant, côté frontal, entourant de façon concentrique la surface circulaire (36, 40) spécifique, étant attribuée à chaque siège de soupape (28, 32).

6. Accouplement multiple selon la revendication 5,
**caractérisé en ce que**, sur chaque soupape à manchon (8), la surface annulaire du siège de soupape (38) s'avance avec un débordement (X2) sur la surface d'accouplement (16), alors que de préférence la surface circulaire du corps de soupape (36) se situe au moins approximativement dans un plan commun avec la surface d'accouplement (16) du support d'accouplement (12).

7. Accouplement multiple selon la revendication 5 ou 6, **caractérisé en ce que**, sur chaque soupape à fiche (10), la surface circulaire du corps de soupape (40) s'avance avec un débordement (X3) sur la surface annulaire du siège de soupape (42).

8. Accouplement multiple selon les revendications 6 et 7, **caractérisé en ce que** les débordements (X2, X3) sont à peu près de même grandeur et en particulier sont de l'ordre de 1 mm.

9. Accouplement multiple selon l'une quelconque des revendications 1 à 8, **caractérisé en ce que**
le support d'accouplement (12) présentant les soupapes à manchon (8) présente un couvercle de protection (44), qui est logé de façon basculante sur un côté et se ferme automatiquement dans la position désaccouplée et recouvre la surface d'accouplement (16) avec les côtés avant des soupapes à manchon (8).

10. Accouplement multiple selon la revendication 9,
**caractérisé en ce que** le couvercle de protection (44) présente un contour d'étanchéité intérieur avec des cavités (46) pour le recouvrement des surfaces annulaires de siège de soupape (38), dépassant de la surface d'accouplement (16), des soupapes à manchon (8).

11. Accouplement multiple selon la revendication 9 ou 10, **caractérisé en ce que** le couvercle de protection (44) présente un joint (48) en bordure et périphérique pour s'appuyer de façon étanche sur la surface d'accouplement (16).

12. Accouplement multiple selon l'une quelconque des revendications 1 à 11,
**caractérisé en ce que** le dispositif d'actionnement (20) est conçu sous forme de verrouillage à levier mécanique avec un élément de levier (50) logé de façon basculante sur l'un des supports d'accouplement (12), l'élément de levier (50) présentant deux branches de levier (52) latérales avec des fentes de verrou (58) en forme de came pour le logement d'éléments de verrou (60) latéraux de l'autre support d'accouplement (14) de telle sorte que, par basculement de l'élément de levier (50) à partir d'une position de détachement dans une position de verrou, les supports d'accouplement (12, 14) sont assemblés par les éléments de verrou (60) se déplaçant par rapport aux fentes de verrou (58).

13. Accouplement multiple selon la revendication 12,
**caractérisé en ce que** l'élément de levier (50) est limité par rapport à son déplacement dans la direction de détachement (66) au moyen d'une butée finale (68) de façon définie dans une position de détachement permettant une séparation des supports d'accouplement (12, 14).

14. Accouplement multiple selon la revendication 13,
**caractérisé en ce que** la butée finale (64) est formée par au moins une embase de butée (68) contiguë au côté ouvert de la fente de verrou (58) spécifique de la branche de levier (52), laquelle embase prend appui dans la position de détachement sur l'élément de verrou (60).

15. Accouplement multiple selon l'une quelconque des revendications 1 à 14,
**caractérisé en ce que** chaque boulon de guidage (70) présente dans sa zone de base contiguë au support d'accouplement (14) une embase annulaire (74) radiale et périphérique qui, par analogie aux embases annulaires (24) des soupapes à fiche (10), vient s'appuyer dans la position d'accouplement sur la surface d'accouplement (16) de l'autre support d'accouplement (12).

16. Moitié d'accouplement (2 ou 4) d'un accouplement multiple (1) selon l'une quelconque des revendications 1 à 15, comprenant un support d'accouplement (12 ou 14) avec au moins deux parties d'accouplement hydrauliques conçues sous forme de soupapes à manchon (8) ou sous forme de soupapes à fiche (10),
**caractérisé en ce que** le support d'accouplement (12 ou 14) présente au moins deux boulons de guidage (70) pour l'engagement dans respectivement un perçage de guidage correspondant (72) d'un autre support d'accouplement (14 ou 12) présentant des soupapes à fiche (10) ou des soupapes à manchon (8), les boulons de guidage (70) étant conçus sous forme de fiches de conduite d'air à chaque fois avec un canal (78) axial et ouvert côté extrémité avant avec une ouverture transversale (80) orientée parallèlement à la surface d'accouplement (18) en direction des soupapes à manchon (8) ou des soupapes à fiche (10).
